# DEMANDE DE BREVET EUROPEEN

(11) **EP 1 964 722 A1**
(43) Date de publication de la demande: **03.09.2008**
(21) Numéro de dépôt: 08151960.5
(22) Date de dépôt: 26.02.2008
(51) Int. Cl.: B60R 5/04, B60R 7/02

(54) **Coffre de vehicule automobile**

(30) Priorité: 02.03.2007 FR 0753620
(71) Demandeur: PEUGEOT CITROËN AUTOMOBILES S.A., 78140 Vélizy Villacoublay (FR)
(72) Inventeur: Le Dall, Christophe, 92150 Suresnes (FR); Duvivier, Arnaud, 91120 Palaiseau (FR); Bouchard, Thierry, 98000 Monaco (MC); Morando, Patrick, 98000 Monaco (MC)
(74) Mandataire: Vigand, Régis Louis Michel

(57) **Abrégé**

Coffre comprenant une tablette de fractionnement, un plancher (12) comportant au moins un dispositif de verrouillage (42) permettant d'y attacher au moins un creux disposé à au moins une extrémité de ladite tablette
**caractérisée en ce que :**
le plancher (12) comporte au moins une rainure (40) apte à recevoir ladite au moins une extrémité de la tablette et en ce que chaque dispositif de verrouillage (42) comporte une pièce formant pêne (44) mobile par rapport à la rainure (40) apte à s'engager dans le creux de ladite au moins une extrémité afin de la bloquer selon toutes les directions.

## Description

La présente invention concerne un coffre arrière d'un véhicule automobile.

II est connu, d'après le document FR-A1-2 861 029, un coffre de véhicule automobile comprenant
- deux panneaux de structure latéraux, chacun comportant un support de tablette de coffre arrière,
- un plancher de coffre arrière s'étendant entre les deux panneaux de structure,
- une tablette de coffre arrière comprenant :
   + un crochet sur chacun de deux bords opposés d'attache de la tablette, les crochets étant aptes à coopérer avec les supports de tablette pour soutenir la tablette horizontale entre les panneaux latéraux, et
   + une articulation, parallèle aux bords d'attache, permettant de plier la tablette pour que la tablette définisse une partie horizontale et une partie verticale.

Dans ce document, il est proposé de fixer la partie verticale de la tablette au plancher du coffre, par l'intermédiaire de moyens de clippage.

La présente invention a pour but de proposer une fixation améliorée de la tablette de coffre.

A cet effet l'invention a pour objet un coffre comprenant une tablette de fractionnement, un plancher comportant au moins un dispositif de verrouillage permettant d'y attacher au moins un creux disposé à au moins une extrémité de ladite tablette caractérisée en ce que le plancher comporte au moins une rainure apte à recevoir ladite au moins une extrémité de la tablette et en ce que chaque dispositif de verrouillage comporte une pièce formant pêne mobile par rapport à la rainure apte à s'engager dans le creux de ladite au moins une extrémité afin de la bloquer selon toutes les directions.

Selon d'autres caractéristiques de l'invention :

La pièce formant pêne est montée dans un évidement débouchant dans ladite au moins une rainure afin qu'elle ne fasse pas saillie du plancher.

Une pièce rapportée attachée dans une saignée ménagée dans le plancher forme ladite au moins une rainure et ledit évidement.

Chaque rainure comporte au moins un dispositif de verrouillage monté de chaque côté du plan vertical porté par sa direction.

Au moins deux dispositifs de verrouillage sont montés en vis-à-vis.

Au moins deux dispositifs de verrouillage sont montés en quinconce.

La pièce formant pêne est montée à rotation par rapport à la rainure.

La pièce formant pêne est montée à translation par rapport à la rainure.

L'invention a également pour objet un véhicule automobile comprenant un coffre tel que décrit précédemment.

L'invention sera mieux comprise à l'aide de la description qui va suivre donnée uniquement à titre d'exemple, et faite en se référant aux dessins annexés, parmi lesquels :
- la figure 1 est une vue en perspective d'une partie arrière d'un véhicule automobile selon l'invention ;
- les figures 2 et 3 sont des vues respectivement en perspective et en coupe d'un dispositif de verrouillage selon un premier mode de réalisation, en position déverrouillée,
- les figures 4 et 5 sont des vues similaires aux figures 2 et 3, le dispositif de verrouillage étant en position verrouillée, et
- la figure 6 est une vue en perspective d'un dispositif de verrouillage selon un second mode de réalisation.

Dans la description qui va suivre, les termes de positionnement sont donnés par rapport à l'orientation habituelle d'un véhicule.

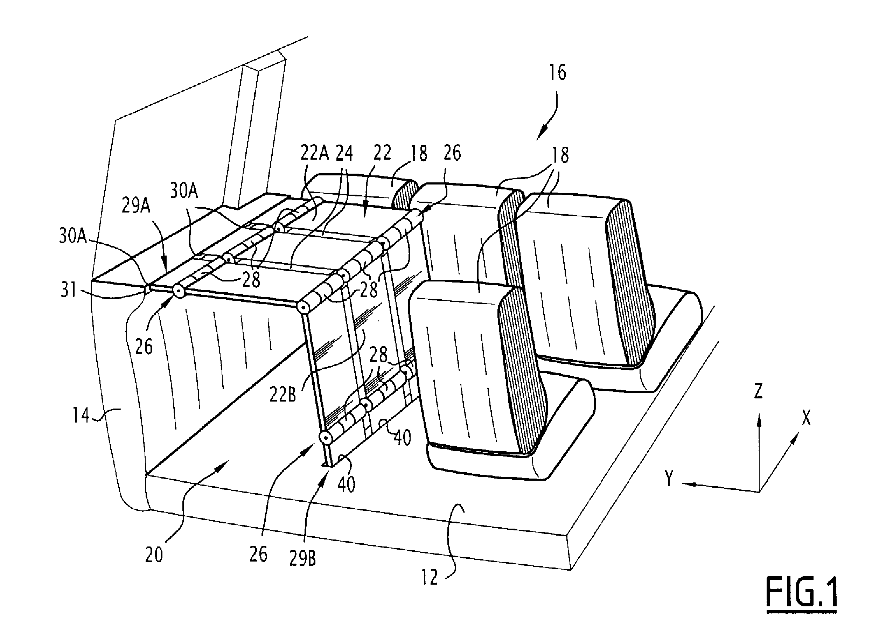

En référence à la figure 1, la partie arrière d'un habitacle de véhicule automobile comprend un plancher arrière 12 et des panneaux de structure latéraux 14 droite et gauche (seul le panneau de gauche est visible sur la figure). Le plancher arrière 12 et les panneaux de structure latéraux 14 délimitent un coffre arrière 16 du véhicule.

Le véhicule comprend en outre des sièges arrière 18 fixés sur le plancher 12, dans le coffre 16. Ces sièges arrière 18 sont amovibles, afin de favoriser soit le nombre de personnes pouvant prendre place dans le véhicule, soit un volume de stockage 20 (le volume du coffre arrière 16 non occupé par les sièges arrière 18).

Dans l'exemple illustré, le coffre arrière 16 comprend des moyens d'attache (non représentés) pour deux rangées de trois sièges chacune. Ainsi, il est possible de monter jusqu'à six sièges 18 : le volume de stockage 20 dans le coffre arrière 16 est alors à son minimum. Au contraire, il est possible de ne monter aucun siège : le volume de stockage 20 dans le coffre arrière 16 est alors à son maximum.

Le fractionnement du coffre arrière 16 entre volume de stockage 20 et sièges arrière 18 est longitudinal suivant que les sièges arrières 18 d'une ou deux rangées sont montés, et/ou transversal si un ou plusieurs sièges d'une rangée ne sont pas montés.

Dans l'exemple illustré sur la figure 1, la première rangée de sièges arrière 18 (la plus avancée) est complète, tandis que la seconde rangée comprend un seul siège 18 disposé sur la droite du coffre arrière 16. Ainsi, le volume de stockage 20 est constitué par la partie arrière gauche du coffre 16.

Afin de cacher cet espace de stockage 20, à la fois depuis l'extérieur du véhicule mais également pour les passagers du véhicule, le véhicule comprend une tablette amovible de coffre 22 destinée à couvrir l'espace de stockage 20 en fournissant une paroi horizontale 22A sensiblement parallèle au plancher arrière 12, ainsi que, le cas échéant, si un fractionnement transversal du coffre arrière 16 est réalisé, une paroi verticale 22B, sensiblement parallèle aux panneaux de structure 14.

La tablette 22 a une forme générale rectangulaire. La tablette 22 est divisée par des articulations parallèles longitudinales 24 et transversales 26. Les expressions « longitudinales » et « transversales » des articulations s'entendent par rapport à la tablette 22. Dans l'exemple illustré, la tablette 22 comporte deux articulations longitudinales 24 espacées de manière égale dans la largeur de la tablette 22, de manière à diviser la tablette 22 en trois parties transversales (par rapport à l'orientation générale du véhicule) égales, ainsi que trois articulations transversales 26 divisant la tablette 22 en deux bandes longitudinales (par rapport à l'orientation générale du véhicule) centrales, et deux bandes longitudinales (par rapport à l'orientation générale du véhicule) périphériques, plus étroites que les bandes centrales, par exemple cinq fois moins étroites.

Les articulations longitudinales 24 sont constituées par un amincissement de matière de la tablette 22, créant une zone de faiblesse apte à se déformer élastiquement.

Chaque articulation transversale 26 est formée de trois charnières 28 alignées mais non jointives. De manière générale, il faut un nombre de charnières correspondant au nombre de parties formées par les articulations longitudinales 24.

De manière générale également, chaque articulation transversale est interrompue par chaque articulation longitudinale pour autoriser les mouvements indépendants des parties d'articulation les unes par rapport aux autres.

Les bandes périphériques définissent chacune un bord périphérique d'attache, respectivement, 29A, 29B, opposés l'un à l'autre.

Les bords d'attaches 29A, 29B comportent des rebords latéraux recourbés 30A, 30B, formant crochets et délimitant chacun un creux. Les rebords latéraux et les creux seront désignés par la suite par les mêmes références 30A, 30B. Les rebords latéraux sont constitués de repliement de matière sur la tranche de la tablette 22, pour fixer à droite et/ou à gauche la tablette à des supports prévus longitudinalement à cet effet sur panneaux latéraux 14. En référence à la figure 1, les supports sont par exemple constitués de rainures 31 longitudinales, parallèlement à cette tranche 32 de la tablette 22.

Trois crochets sont prévus de chaque côté (un pour chaque partie transversale de la tablette 22). Les crochets prévus sur la partie horizontale sont référencés 30A, tandis que les crochets prévus sur la partie verticale sont référencés 30B.

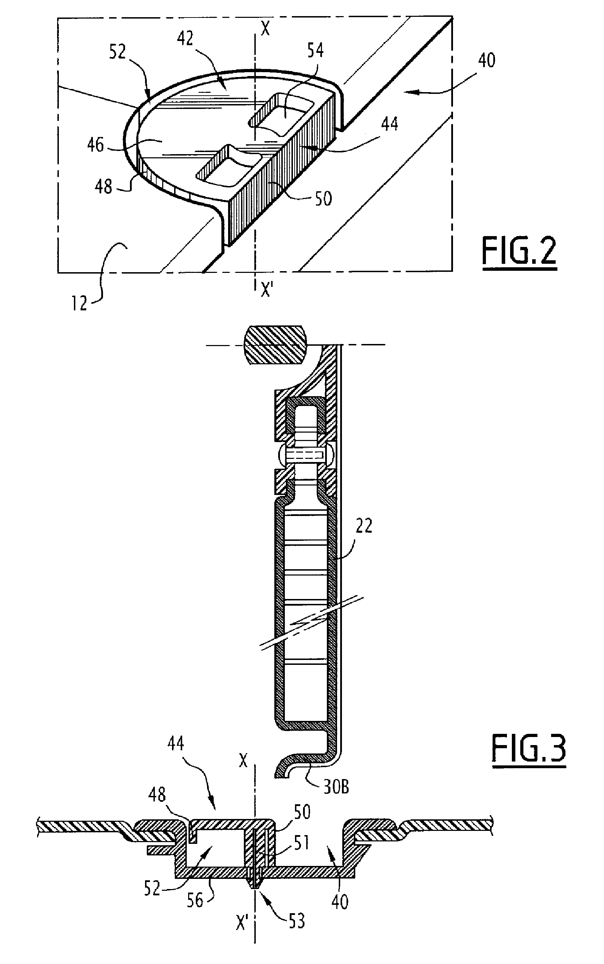

Trois rainures d'indexage 40 de la tablette 22, qui peuvent être jointives, sont ménagées dans le plancher 12 pour recevoir en même temps chacune un crochet 30B de la partie verticale 22B de la tablette. L'une des rainures d'indexage 40 est représentée sur la figure 2.

Les trois rainures d'indexage 40 sont identiques et s'étendent les une à la suite des autres longitudinalement, parallèlement aux supports de tablette des panneaux de structure latéraux 14.

Les trois rainures d'indexage 40 étant identiques, une seule sera décrite par la suite, en référence aux figures 2 à 5.

La rainure d'indexage 40 possède une longueur et une largeur égales ou très légèrement supérieures respectivement à la longueur et la largeur d'un crochet 30A ou 30B.

Ainsi, lorsque le crochet 30B est introduit dans la rainure d'indexage 40, le crochet 30B est bloqué longitudinalement et transversalement, c'est-à-dire dans le sens avant-arrière (axe X sur la figure 1) et dans le sens droite-gauche (axe Y sur la figure 1) par rapport à au plancher 12.

Le plancher 12 comprend en outre au moins un dispositif de verrouillage 42 pour au moins une rainure d'indexage 40. Dans l'exemple décrit, le plancher 12 comprend trois dispositifs de verrouillage 42.

Le dispositif de verrouillage 42 est du type à loquet comprenant une pièce mobile 44 constituant le pêne du loquet. Le pêne 44 est en forme de disque tronqué d'environ un tiers. Le pêne 44 comprend ainsi une surface supérieure 46, un bord circulaire 48 et un bord droit 50 correspondant à la troncature. Le pêne 44 est disposé dans un évidement 52 de forme correspondante réalisé sur le plancher 12. L'évidement 52 est réalisé débouchant dans la rainure d'indexage 40. L'évidement 52 a une profondeur telle que la surface supérieure 46 du pêne 44 ne fasse pas saillie du reste du plancher 12 afin notamment de ne pas abîmer les objets déposés dessus.

Le pêne 44 est monté en rotation en son centre (le centre du disque non tronqué) par rapport au plancher 12 suivant un axe vertical XX'. Cet axe vertical XX' est situé de sorte que le bord tronqué 50 borde latéralement la rainure 40 sans que le pêne 44 empiète dessus. II s'agit de la position déverrouillée du pêne 44 illustrée sur les figures 2 et 3. L'axe XX' est matérialisé par un pion inférieur 51 en saillie au centre du disque, encliqueté dans un orifice 53.

Le pêne 44 est mobile en rotation autour de l'axe vertical XX' de manière à lui faire prendre une position de verrouillage dans laquelle le bord circulaire 48 déborde dans la rainure 40.

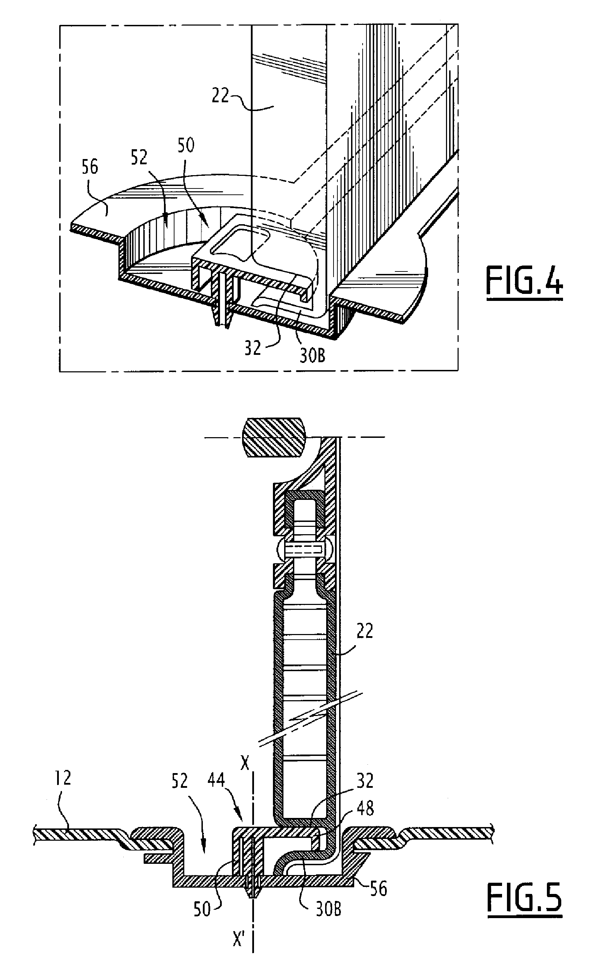

Ainsi, en référence aux figures 4 et 5, lorsque le pêne 44 est pivoté, il vient s'engager dans le creux 30B. Le crochet formant un mentonnet pour le pêne, afin d'empêcher la sortie de l'extrémité 29B hors de la rainure 40. Ainsi, la tablette 22 est bloquée dans la direction verticale (axe Z sur la figure 1).

Le pêne 44 comprend également, sur sa surface supérieure 46, deux dépressions 54 disposées symétriquement de part et d'autre de l'axe de rotation vertical XX', permettant de le manoeuvrer manuellement.

Comme cela est illustré sur les vues en coupe des figures 3 et 5, de préférence, l'évidement 52 et la rainure 40 sont définis dans une pièce unique 56 rapportée sur le plancher 12 et percée en son centre de l'orifice 53. Préférentiellement, la pièce rapportée 56 s'insère par clippage dans une saignée ménagée dans le plancher 12.

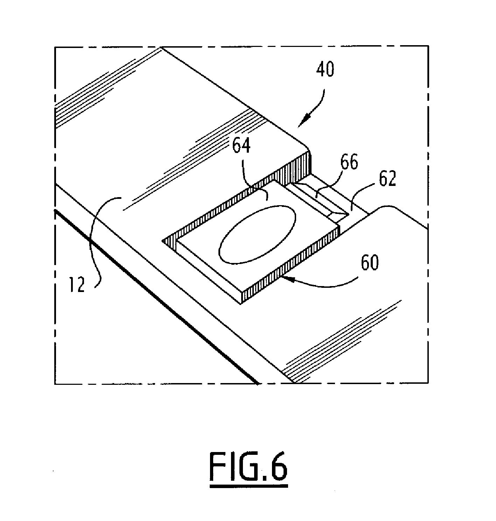

En référence à la figure 6 un second mode de réalisation du dispositif de verrouillage est représenté.

Dans ce mode de réalisation, le dispositif de verrouillage 42 comporte un verrou 60 monté mobile en translation dans une rainure de guidage 62, débouchant perpendiculairement dans la rainure d'indexage 40. Comme précédemment, la rainure de guidage 62 a une profondeur telle que le pêne 66 du verrou 60 ne fasse pas saillie du reste du plancher 12. La rainure de guidage 62 forme un logement pour le verrou 60.

Le verrou 60 comprend un bouton rectangulaire 64 et, au bout du bouton 64, le pêne 66 dirigé vers la rainure d'indexage 40.

En position déverrouillée, représentée sur la figure 6, le pêne 66 est situé à distance de la rainure d'indexage 40.

Une position de verrouillage est obtenue en faisant glisser le verrou 60 dans la rainure de guidage 62, en direction de la rainure d'indexage 40.

En position de verrouillage, le pêne 66 pénètre dans la rainure d'indexage 40. Ainsi, lorsque le crochet 30B est reçu dans la rainure d'indexage 40, le pêne 66 vient s'y engager. De la même manière que le premier mode de réalisation, on obtient un blocage de la tablette 22 dans la direction verticale.

Comme précédemment, la rainure de guidage 62 et la rainure d'indexage 40 sont de préférence définies dans une pièce rapportée, insérée par clippage dans une saignée du plancher 12.

En variante, qui peut être mise en oeuvre dans chacun des deux modes de réalisation précédents, le plancher de coffre ne comprend qu'une seule rainure apte à recevoir, en même temps, l'ensemble des crochets 30B de la partie verticale de la tablette 22. Une pluralité de dispositifs de verrouillage, selon le premier mode ou selon le second mode de réalisation de l'invention, est alors disposée sur le côté de la rainure unique de manière à pouvoir coopérer chacun avec l'un des crochets de la tablette.

De même, il est prévu au moins un dispositif de verrouillage 42 de chaque côté de la rainure 40 afin de pouvoir bloquer la tablette 22 selon qu'elle soit pliée à gauche ou à droite dans le coffre 16. La distribution des dispositifs 42 peut ainsi être sensiblement symétrique par rapport au plan vertical porté par la rainure 40 ou en quinconce les uns par rapport aux autres c'est-à-dire décalés le long de la rainure 40.

L'invention permet donc d'obtenir un système simple et efficace de fixation de la partie verticale d'une tablette de coffre pliable.

## Revendications

1. Coffre (16) comprenant une tablette de fractionnement (22), un plancher (12) comportant au moins un dispositif de verrouillage (42) permettant d'y attacher au moins un creux (30A, 30B) disposé à au moins une extrémité (29A, 29B) de ladite tablette
**caractérisée en ce que :**
le plancher (12) comporte au moins une rainure (40) apte à recevoir ladite au moins une extrémité (29A, 29B) de la tablette (22) et **en ce que** chaque dispositif de verrouillage (42) comporte une pièce formant pêne (44, 66) mobile par rapport à la rainure (40) apte à s'engager dans le creux (30A, 30B) de ladite au moins une extrémité (29A, 29B) afin de la bloquer selon toutes les directions (XYZ).

2. Coffre (16) selon la revendication 1, **caractérisé en ce que** la pièce formant pêne (44, 66) est montée dans un évidement (52, 62) débouchant dans ladite au moins une rainure (40) afin qu'elle ne fasse pas saillie du plancher (12).

3. Coffre (16) selon la revendication 2, **caractérisé en ce qu'**une pièce rapportée (56) attachée dans une saignée ménagée dans le plancher (12) forme ladite au moins une rainure et ledit évidement.

4. Coffre (16) selon l'une des revendications précédentes, **caractérisé en ce que** chaque rainure (40) comporte au moins un dispositif de verrouillage (42) monté de chaque côté du plan vertical porté par sa direction.

5. Coffre (16) selon la revendication 4, **caractérisé en ce que** au moins deux dispositifs de verrouillage (42) sont montés en vis-à-vis.

6. Coffre (16) selon la revendication 4, **caractérisé en ce que** au moins deux dispositifs de verrouillage (42) sont montés en quinconce.

7. Coffre (16) selon l'une des revendications précédentes, **caractérisé en ce que** la pièce formant pêne (44) est montée à rotation par rapport à la rainure (40).

8. Coffre (16) selon l'une des revendications 1 à 6, **caractérisé en ce que** la pièce formant pêne (66) est montée à translation par rapport à la rainure (40).

9. Véhicule automobile comprenant un coffre (16) conforme à l'une quelconque des revendications précédentes.
